# EUROPEAN PATENT SPECIFICATION

(11) **EP 2 461 441 B1**
(45) Date of publication and mention of the grant of the patent: **08.04.2015**
(21) Application number: 11191470.1
(22) Date of filing: 01.12.2011
(51) Int. Cl.: H02G 1/04

(54) **Wheel for installing cables**
Rad zur Verlegung von Kabel
Roue pour l'installation de câbles

(30) Priority: 01.12.2010 NO 20101683
(43) Date of publication of application: 06.06.2012
(73) Proprietor: Linjeservice AS, 1107 Oslo (NO)
(72) Inventor: Glavin, Terje, N-1127 Oslo (NO); Stenslie, Edmund, N-2857 Skreia (NO)
(74) Representative: Oslo Patentkontor AS

(56) References cited:
- WO-A1-97/34350
- JP-A- H06 276 632
- JP-U- S5 789 317

## Description

The present invention relates to a mounting wheel/roller for ropes, wires or cables, preferably live wires and cables, where such mounting wheel has an axle around which the wheel that can turn, and where the wheel comprises at least one groove around its circumference for pulling of a wire or cable, and where the mounting wheel comprises at least one and preferable two holes running parallel with each other perpendicular to and in a distance from the axle of the mounting wheel, where the mounting wheel is divided in at least two parts with a dividing plane perpendicular to the axle of the mounting wheel and where the dividing plane run through the holes of the mounting wheel. It is preferred that the dividing plane dividing the mounting wheel and running parallel to the rotational axis of the mounting wheel, divides the mounting wheel in two equal parts.

During mounting of ropes, wires or cables, e.g. high-voltage cables and low-voltage cables, in live poles, cable brackets are used on top of the poles to hold the wires and cables in position. In such cable brackets, the cables or wires can be pulled over wheels with peripheral grooves before fastening, to ease pulling of the wires over the poles or anchorage points for cables. When the cables or wires have been pulled and have a suitable span, the wires or cables are attached to the pole top by means of a top clamp. Earlier, the cables and wires where pressed towards the lead wheel by means of a cable clamp when the cables had been pulled. However, this resulted in a small fitting surface for the cable on the mounting wheel and the cable was exposed to wear and tear and fatigue in the contact point.

Later, there have been arranged through holes in the guiding wheel to make a longer attachment zone for the cables, and the cables where arranged in these through holes by dividing the guiding wheel so that the holes where divided in two with a plane running parallel with the rotational axis of the guiding wheel and where the part of the guiding wheel lying over the cable, could be removed by removing the upper part of the guiding wheel. The cable was then laid down in the groove thereby formed and the upper part of the guiding wheel could then be placed over the cable and the parts of the guiding wheel could be mounted to each other by means of nuts.

Such a horizontally divided guiding wheel with grooves as explained above, is formerly known from Norwegian Patent No. 301 679. Here it is described that to avoid flow in the cable metal between the guiding wheel and the attachment device/clamping device anchoring the cable to the guiding wheel peripherally, the guiding wheel can be provided with traverse grooves where the cable can rest. It is also mentioned that if such grooves are used, the guiding wheel can be divided in a number of sections, and it is also mentioned that such traverse grooves can have different sizes to be adapted to the diameter of the current cable.

As background technology it can also be referred to US Patent No. 2,188,715 and US Patent No. 3,622,689 from where it is known devices for combined transport/anchoring/relieving of suspended wire and cables, especially electrical wires and cables. Here it is described devices provided with a fork with two legs, where it is arranged a guiding wheel with a peripheral groove for the cable between the legs of the fork. Such devices are also provided with a protrusion for anchoring of the cable in the peripheral groove of the guiding wheel after suspension of the cable. However, such devices would have the same disadvantages as mentioned above, with flow in the metal and weakening/fatigue of the metal in the anchoring area between the guiding wheel and the protrusion.

To ease the mounting of cables and wires in such guiding wheels as described above, where the guiding wheel comprises a peripheral guiding groove for a cable and through holes in the guiding wheel for anchoring of wires, the guiding wheel according to the invention is divided in a plane through the peripheral groove, where this dividing plane run mainly perpendicular to the axis of the guiding wheel, thereby dividing the guiding wheel in at least two parts. by this, it is obtained a further simplification of the mounting of the cable through the mounting hole of the guiding wheel while at the same time giving a possibility for control of which size of the mounting holes that can be used on different cable sizes.

As explained in Norwegian Patent No. 301 679 which disclose a mounting wheel according to the preamble of claim 1, the top of the guiding wheel must be removed to expose the attachment grooves of the guiding wheel. In practice, this is done by contracting a plastic or rubber strip in the peripheral groove of the guiding wheel, which is divided at the dividing groove of the guiding wheel thereby seesawing the upper and thereby liberated part of the guiding wheel around the non-cut part of the pitching to expose the mounting groove of current interest.

WO 97/34350 also disclose a mounting wheel according to the preamble of claim 1.

According to this earlier technique, the cable will then be arranged in the anchoring/mounting groove of interest where after the temporarily removed part of the guiding wheel again is placed back on the guiding wheel to anchor the cable in the attachment groove. Such a procedure is however, cumbersome and presents a delaying step in the mounting procedure. At least these aspects of the prior art present problems it has been a desire to solve.

A solution to these problems is formed by a guiding wheel for ropes, wires and cables that is divided in at least one dividing plane, dividing the guiding wheel as will be further explained.

The invention thereby relates to a guiding wheel for ropes, wires and cables according to claim 1.

The guiding wheel is used in a mounting wheel arrangement, where the guiding wheel or mounting wheel has a shaft around which the wheel can rotate, and where the wheel comprises at least one hole for mounting of the cable, which hole runs chordally and perpendicular to the shaft of the mounting wheel. The wheel is divided in at least two parts or halves with one or more dividing planes running perpendicular to the shaft on the wheel and where the dividing planes run through the one or more holes of the wheel. The holes can be arranged at a distance to the shaft.

In one embodiment, two halves of the guiding wheel or mounting wheel are divided by one dividing plane running perpendicular to the shaft. It is an advantage if the wheel comprises at least one groove around the circumference, the groove partly encircling the cable during pulling of the cable.

The mounting holes of the guiding wheel or mounting wheel are adapted to the diameter of a cable envisaged to run through the mounting hole. As an example can the diameter of the mounting holes advantageously be 0.5-5 mm less than the diameter of the cable envisaged to run through the mounting hole. The shape of at least one mounting hole can also be oval.

In a mounting wheel or guiding wheel according to the invention, can the shaft of the mounting wheel be a bolt and that the parts of the mounting wheel are held towards each other by means of a nut. However, it is an advantage if there is a play or gap between the two halves so that the halves to some extent will rotate independently of each other during pulling of a cable.

A mounting wheel arrangement with a guiding wheel as described above also comprises a screw and attachment tool comprising a spanner and a suspension member. A first end section of the spanner is a arranged on the bolt on one side of the wheel and a first end section of the suspension member is arranged on the other side of the wheel, the second end sections of the spanner and suspension member respectively, are joined and connected to each other.

It is an advantage if the suspension member is provided with a suspension organ for movably connecting to a swing hook or other anchoring member. It is also an advantage if the spanner has the shape of a handle comprising a hole being able to pass over the clamping nut, where the hole has a shape corresponding to the nut, enabling it to loosen and fasten the nut on the shaft.

The invention further encompasses a method for mounting a rope, cable or wire in a mounting wheel rotatable around a rotational axis according to claim 12.

A method for mounting a rope, cable or wire in a mounting wheel rotatable around a rotational axis, where the wheel comprises a shaft and one or more chordal anchoring holes, and where the wheel is divided by at least one plane running mainly perpendicular to the rotational axis and through the one or more chordal holes, comprises the following steps:
- pulling a cable over the circumference of the wheel to a desired position,
- shifting a first part of the wheel over the shaft to form a gap between two parts of the wheel,
- letting the cable slip into a suitable anchoring hole,
- shifting the first part back over the shaft,
- clamping the parts of the wheel together, thereby clamping the cable in the anchoring hole.

The method can also comprise the steps of:
- providing a peripheral groove in the wheel,
- providing a bolt as shaft,
- providing a nut (8) on the bolt,
- pulling a cable over the peripheral groove of the wheel,
- clamping the parts of the wheel together by means of the nut (8) on the bolt.

The invention will now be further explained below with reference to the attached drawings where:

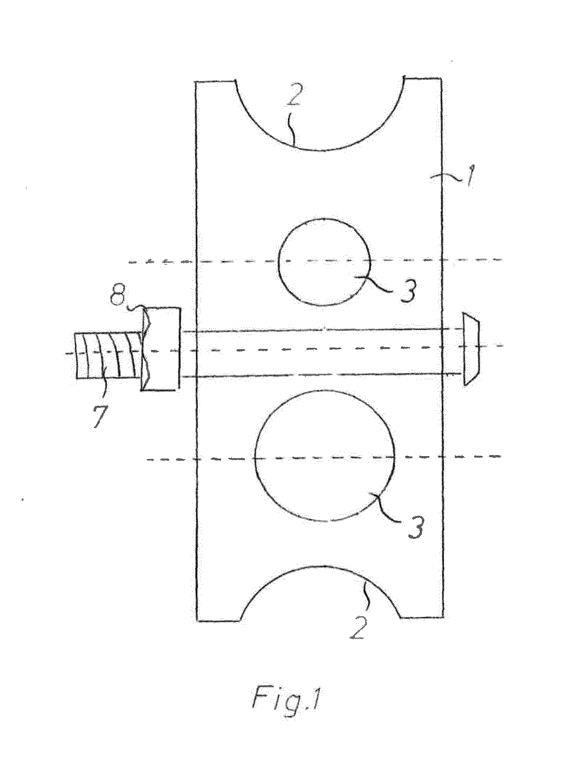

Fig. 1 shows a cross section of the composition of a guiding wheel according to prior art.
Fig. 2 shows a cross section of the composition of a guiding wheel according to the present invention.

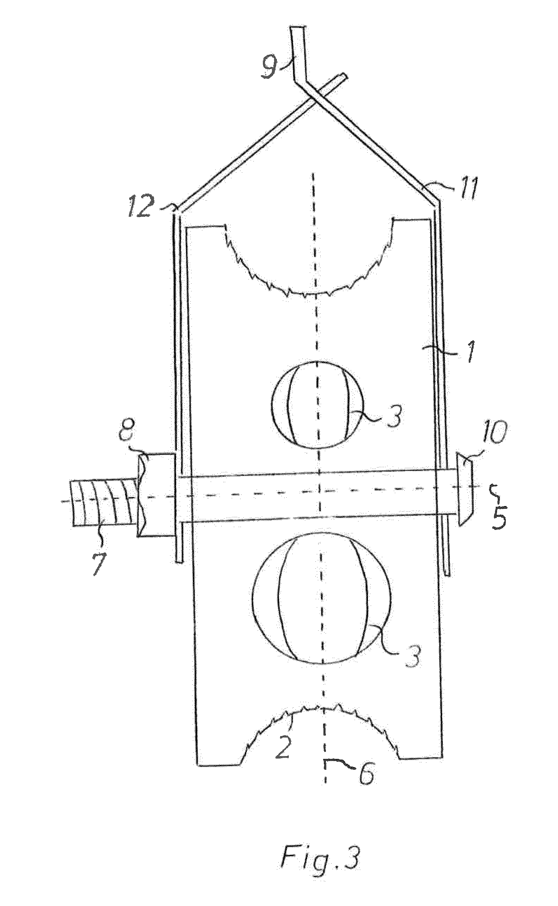

Fig. 3 shows a cross section of an alternative embodiment of a guiding wheel according to the present invention.
Fig. 4 shows an embodiment of a mounting tool for a guiding wheel according to the invention.
Fig. 5 shows a perspective view of a further embodiment of the invention.

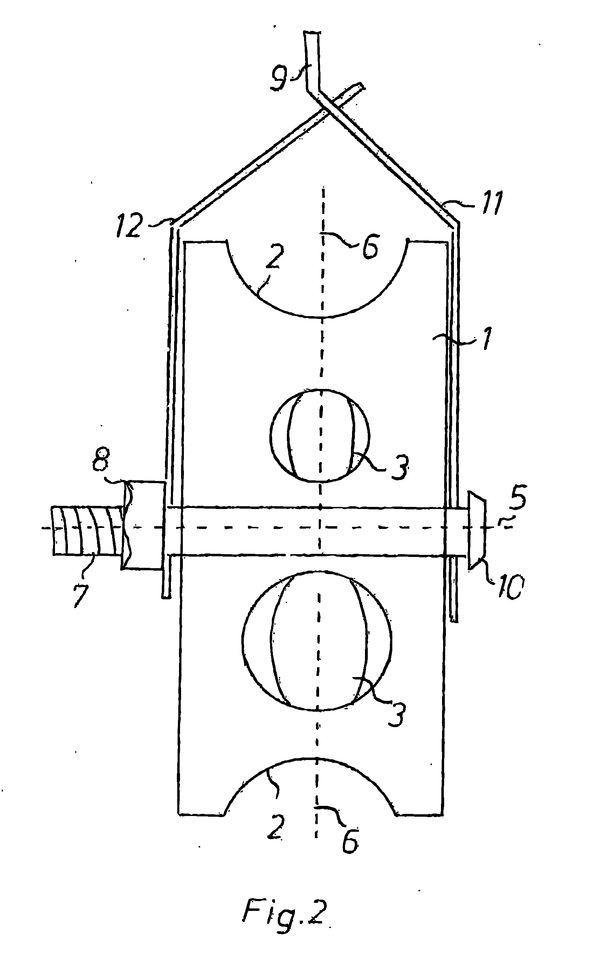

With reference to fig. 2, the present invention comprises a guiding wheel 1 for guiding, mounting and anchoring cables ropes, hoses and wires. For the sake of simplicity, when referring to a cable in this description, it is meant a cable, rope, wire, hose or other elongated object or device to be mounted in a mounting wheel according to the invention.

The guiding wheel 1 has a rotational shaft 7 with a rotational axis 5 and a peripheral groove 2 for guiding of the cable, and comprising at least one hole 3 running through the wheel 1 perpendicular to the wheel shaft 7 and running as a chord (chordally). The guiding wheel 1 is further distinguished in that it is divided via at least one plane 6 running perpendicularly on the rotational axis of the wheel and dividing the one or more holes 3 in at least two, so that the guiding wheel 1 can be divided to expose the chordal hole or holes 3 to be able to arrange the cable in the hole 3 without removing the cable from the peripheral groove 2 in the guiding wheel 1 and without removing parts of the guiding wheel to anchor the cable in the guiding holes 3. When the wheel is divided into two halves, it can be seen that the one or more holes 3 are formed of two corresponding or mainly corresponding grooves forming a chordal through hole in the wheel when the two halves are combined.

The purpose of dividing the guiding wheel 1 with a chordal anchoring holes 3 as explained above, is to avoid being obliged to remove a part of the guiding wheel 1 over the holes 3 during installation of the cable, as one has to do in a known solution, where the part of the guiding wheel lying between the guiding groove 2 and the anchoring grooves 3 is removed, to be reassembled after the cable is arranged in the chordal anchoring hole 3.

The peripheral guiding groove 2 of the guiding wheel 1 can have an even surface or it can be provided with transversally or longitudinally running ridges or grooves to improve the friction between the cable and guiding groove. By improving the friction between the cable and guiding wheel, it can be avoided that the cable slips in the guiding groove 2 if the guiding wheel rotates to slowly compared to the movement or displacement of the cable, instead of the cable being led forwards as the guiding wheel rotates about the shaft 7. This can as an example be relevant when it is raining, as the guiding wheel 1 can become wet. By preventing the cable from slipping in the guiding groove 2, it can also be avoided that a possible insulation of the cable is damaged during pulling of the cable.

Rotation of the guiding wheel 1 about the shaft 7 can also be eased by providing the guiding wheel or shaft with a slide bearing, roller bearing, ball bearing or the like (not shown). However, due to the production costs for the guiding wheel according to the invention, it will be preferred to make the guiding wheel according to the invention without such bearing.

In the shown embodiment where the guiding wheel 1 is divided in only two mainly equal parts by means of a plane 6 running perpendicularly to the rotational axis 5, the running wheel 1 is opened when one half of the wheel is displaced or shifted on the shaft 7 of the wheel 1, thereby forming a gap between the two halves rendering the grooves forming the hole 3 accessible. The cable passing over the wheel 1 is then let down in the now divided hole 3, where after the displaced half of the wheel is shifted back in position to rest towards the first guiding wheel half to clamp the cable in the relevant chordal hole 3. The guiding wheel halves are then clamped together by tightening the wheel halves towards each other by means of screwing at least one nut 8 on the shaft 7.

A method for mounting with a mounting wheel according to the invention as explained above, can be implemented in shorter time than what is possible with guiding wheels according to prior art, while maintaining the advantage of the chordal holes. During installation of the mounting holes 3 as explained above, the contact surface for the cable through the holes 3 is large and gentle to the wire.

In guiding wheels according to prior art, the cable could also be mounted by leading it directly through the relevant guiding hole 3 of the guiding wheel 1. This is however a cumbersome and time consuming mounting method which also makes it difficult to clamp the cable in the relevant guiding hole. (When the wire is to be threaded, it is not practical to clamp the wheel parts towards each other, as this would prevent the wire from sliding in the holes. The guiding hole 3 could be sufficiently big to make the threading simple, but the cable would then have a sufficiently small diameter to easily pass through the guiding hole 3 precluding clamping of the cable in the hole).

To be able to clamp the cable in the relevant guiding hole 3 in the guiding wheel according to the invention, the one or more guiding holes 3 are constructed with adapted diameters to the relevant cable diameters (that is, with a somewhat smaller diameter - in size range 0,5-5 mm smaller- than the diameter of the cable). Alternatively or in addition, can the guiding holes 3 have an elliptical shape, so that the smallest axis of the ellipsis clamp the cable as explained above (in which case the cable will have some deformation in the clamping area, but where the spot load is avoided).

It can also be possible to provide one or more guiding holes 3 with a lining that can assist in clamping the cable in the hole 3. However, for the sake of simplification, it may be more practical to make the guiding holes 3 with mainly the same diameters as the relevant cables to be clamped. With "mainly" it is in this connection meant that it can be accepted a difference between diameter of the hole and diameter of cable of ± 1%. Consequently and as an example, it can be used a cable of 9,9-10,1 mm for an anchoring hole of 10 mm, formed as a circular hole, where the diameter is "mainly" the same as the diameter of the cable. The diameter of the guiding holes 3 (if the guiding wheel 1 is provided with more than one guiding hole 3) can be made different from each other so that the guiding wheel can be used for leading and attachment of cables with different diameters. Alternatively, the diameter of the anchoring holes 3 can be the same.

To open the guiding wheel 1 according to the invention, it is preferred that this is done by loosening the nut 8, so that one half of the guiding wheel can be shifted along the shaft 7 to form a space between the guiding wheel halves. This enables the cable (not shown) to slip down between the wheel halves and be attached in the chordal anchoring hole 3 which is designed to fit the cable diameter. When the cable is arranged in the anchoring hole 3, the removed or displaced guiding wheel half is brought back to abutment or approaching the fixed guiding wheel half and the nut 8 is tightened to attach the cable in the anchoring hole 3.

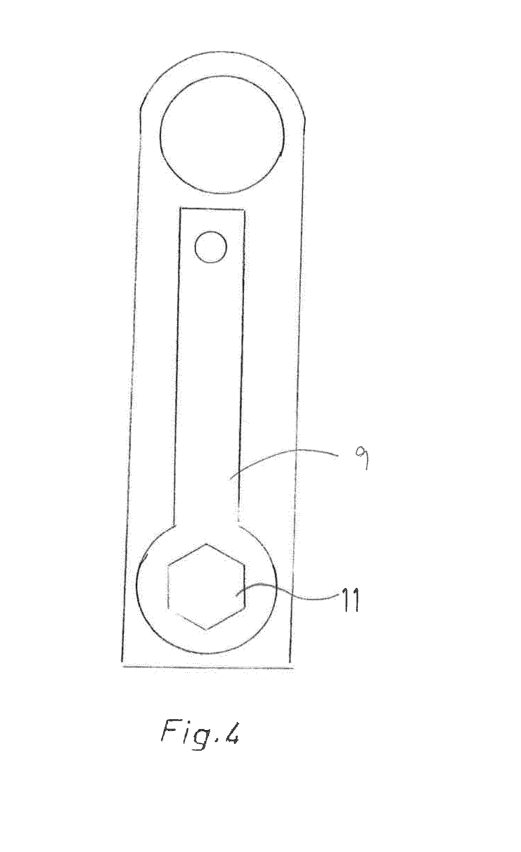

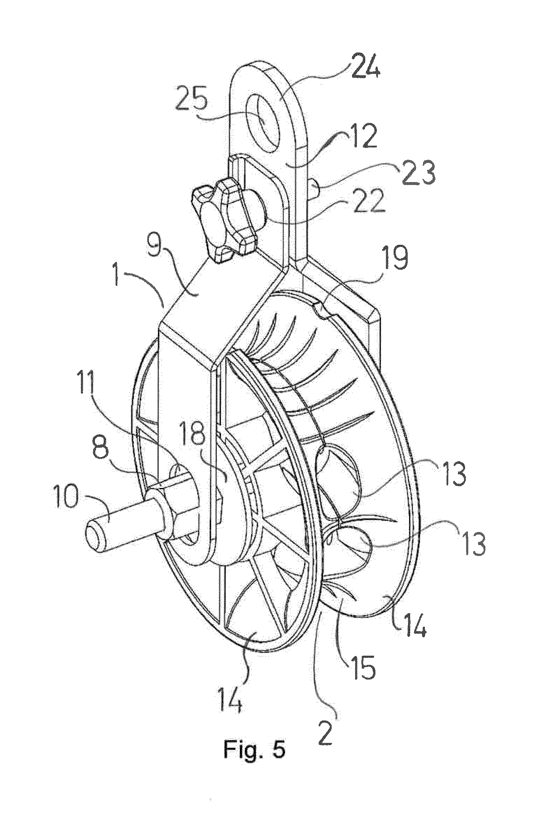

To ease disassembly and reassembly of the guiding wheel half 1 as explained above, the guiding wheel according to the invention can be provided with a tool set comprising a screw and attachment tool 9,12. This screw and attachment tool 9,12 is arranged on the shaft 7 of the guiding wheel 1 and an embodiment of it is shown on fig. 4. The tool 9,12 is formed of a spanner 9 with an opening 11 enabling the tool to fit over the attachment nut 8 for the guiding wheel 1. By designing the hole in such a way that it is possible for this hole to tighten and attach the nut 8, it will be unnecessary for the installer to bring tools as this spanner can be used for the task, and this will also present a labour-saving and time saving element upon mounting of the guiding wheel according to the invention. The tool will be further explained with reference to fig. 5.

Such a construction of the guiding wheel and clamping device, as explained above, will make the actual mounting of the cable substantially less time consuming and also a more secure anchoring of cables and reduction of material costs for attachment devices for guiding wheel is also possible.

The shaft 7 can, for example, be made of a bolt 10. To protect the guiding wheel 1 and to secure a sufficient anchoring of the parts of the guiding wheel to each other after final assembly of the guiding wheel after the present cable is attached in the anchoring holes 3, it is possible to arrange washers between the bolt 10 and the guiding wheel. Such washers can be made in a suitable material such as rigid plastic or metal, preferably nylon or aluminium.

Fig. 5 shows a perspective view of a further embodiment of the invention. The guiding wheel 1 is formed by two corresponding mirrored halves 14. The halves are provided with two grooves 13 of different shape and diameter in such a way that the grooves 13 of each half 14 will combine with the grooves of the other half to form a chordal hole in the combined wheel 1. The halves are also provided with recess 15 on the circumference forming one half each of the peripheral groove 2. The surface of the recesses is provided with transversal ridges 16. The ridges are arranged concurrent on the halves forming the wheel.

A bolt 10 is provided as a shaft through the rotational axis of the wheel, as explained above. A nut 8 and a washer 18 is holding the two halves sufficiently close to each other to form a peripheral groove 2 that is able to hold the cable passing over the wheel. However, the halves are not clamped together during pulling of the cable over the wheel. The two halves will to some extent rotate independently of each other.

When the cable is in its final position and is ready to be clamped in the mounting wheel, the two halves should be in a position where the corresponding grooves 13 form the predefined chordal holes. To simplify adjustment of the wheel halves, an recess 19 can be provided on each half 14 in such a way, that when the two halves are arranged symmetrical to each other forming the predefined holes, the recesses are situated symmetrically to each other on the wheel.

The wheel 1 is held in a screw/attachment tool 9, 12. The screw/attachment tool comprises a spanner 9 and a suspension member 12. The spanner 9 is formed as an elongated plate element provided with an opening 11 and a screw hole 22. The spanner is formed so that the opening 11 can be placed over the nut 8 on the bolt 10 and a screw 23 can be placed in the hole 22 in such a way that it locks the spanner 9 and suspension member 12 in relation to each other.

The suspension member 12 is formed as an elongated plate element. It is also provided with a hole (not shown) for placing it on the bolt 10, on the other side of the wheel, compared to the spanner 9 and a hole for the screw 23. The suspension member 12 is provided with a further suspension organ 24. The suspension organ 24 is provided to attach the guiding wheel 1 according to the invention to a pole, building or other surface where the cable is passing and on which the cable is to be mounted.

In the present embodiment, the suspension organ 24 is formed as an extension of the elongated plate element that is provided with a hole 25. The pole, building or the like where the cable is to be attached is preferably provided with a swing hook or other suitable anchoring member. The hole 25 of the suspension organ 24 is then coupled to the anchoring member so that the guiding wheel can rotate to some extent while being attached to the pole, building or other surface.

The elongated plate elements of the spanner 9 and suspension member 12 of the present embodiment are formed with two mainly flat end sections being connected by a mainly flat middle section. The middle section of the plate elements is arranged in an angle to the two end sections. In this way, the first end sections of the spanner 9 and suspension member 12 pass over one side of the guiding wheel 1, the angled middle sections lead the two plate elements towards each other and the second end sections of the two plate elements are placed against each other with the holes 22 over each other so that a screw 23 can be entered and attached to the elements. The suspension organ 24 projects from the suspension member to provide an easy attachment means for the guiding wheel.

Examples of choices of material for the guiding wheel according to the invention are metal, composite plastic or fibre reinforced composite plastic.

### Example 1

All parts of the device according to the invention is in this example made of aluminium. The guiding wheel has in this example a diameter of 20 cm, with a thickness of 6 cm and an outer even guiding groove 2 with a diameter of 3 cm. The chordal holes 3 have different diameters, where the biggest has a diameter of 2.5 cm and the smallest has a diameter of 1.5 cm. This guiding wheel is divided perpendicularly to the axis of the wheel and in the middle of the guiding groove 2.

### Example 2

This example has the same dimensions and materials as example 1, but the chordal anchoring holes 3 are here lined with rubber on the inside at a maximum thickness of 0.5 cm.

## Claims

1. A mounting wheel arrangement for cables, ropes, wires, hoses and other elongated objects, said arrangement includes a mounting wheel (1) with a shaft (7) around which the wheel (1) can rotate, the mounting wheel (1) comprises at least one hole for anchoring the cable, the hole being arranged chordally and perpendicularly to and at a distance from the shaft (7),
**characterised in that** the mounting wheel (1) is divided into at least two parts or into two halves (14) with one or more dividing planes (6) being perpendicular to the shaft (7), the dividing planes (6) cutting through the one or more holes (3) of the mounting wheel (1), wherein the at least two parts or the two halves can be shifted or displaced with respect to each other over the shaft (7) to form a gap between the parts or halves (14) of the wheel (1).

2. An arrangement according to claim 1,
**characterised in that** the wheel (1) is divided by one dividing plane running perpendicular to the shaft (7).

3. An arrangement according to claim 1 or 2,
**characterised in that** the wheel (1) comprises at least one groove (2) around the circumference, the groove partly encircling the cable during pulling of the cable.

4. An arrangement according to any of the claims 1-3,
**characterised in that** the mounting holes (3) are adapted to the diameter of cables envisaged to run through the mounting holes (3).

5. An arrangement according to claim 4,
**characterised in that** the diameter of the mounting holes (3) are 0,5-5 mm less than the diameter of the cable envisaged to run through the mounting holes (3).

6. An arrangement according to any of the claims 1-5,
**characterised in that** at least one mounting hole (3) is oval.

7. An arrangement according to the claims 1-6,
**characterised in that** the shaft (7) of the mounting wheel is a bolt (10) and that the parts of the mounting wheel (3) are held towards each other by means of a nut (8).

8. An arrangement according to the claims 1-7,
**characterised in that** it is further provided with a screw and attachment tool (9,12) comprising a spanner (9) and a suspension member (12).

9. An arrangement according to claim 8,
**characterised in that** a first end section of the spanner (9) is arranged on the bolt (10) on one side of the wheel (1) and a first end section of the suspension member (12) is arranged on the other side of the wheel, second end sections of the spanner (9) and suspension member (12) respectively, are joined and connected to each other.

10. An arrangement according one of to the claims 8 or 9,
**characterised in that** the suspension member (12) is provided with means for suspending the arrangement.

11. An arrangement according one of to the claims 8-10,
**characterised in that** the spanner (9) has the shape of a handle comprising a hole (11) being able to pass over the clamping nut (8).

12. A method for mounting a cable rope, wire, hose or other elongated object in a mounting wheel (1) rotatable around a rotational axis, the wheel (1) comprising a shaft (7) and one or more chordal anchoring holes (3) arranged perpendicularly to and at a distance from the shaft (7), the wheel being divided into at least two parts by at least one plane running mainly perpendicular to the rotational axis and through the one or more chordal anchoring holes, comprising the steps of:
- pulling a cable over the circumference of the wheel (1) to a desired position,
- shifting a first part of the wheel over the shaft to form a gap between two parts of the wheel,
- letting the cable slip into a suitable anchoring hole (3),
- shifting the first part back over the shaft (7),
- clamping the parts of the wheel together, thereby clamping the cable in the anchoring hole (3).

13. A method according to claim 12, also comprising the steps of:
- providing a peripheral groove in the wheel,
- pulling a cable over the peripheral groove (2)of the wheel.

14. Method according to claim 12 or 13, also comprising the steps of:
- providing a bolt (10) as shaft,
- providing a nut (8) on the bolt (10),
- clamping the parts of the wheel together by means of the nut (8) on the bolt (10).

## Patentansprüche

1. Eine Befestigungsradanordnung für Kabel, Seile, Drähte, Schläuche und andere längliche Objekte, wobei die Anordnung ein Befestigungsrad (1) mit einer Achse (7) umfasst, um die sich das Rad (1) drehen kann, das Befestigungsrad (1) wenigstens ein Loch zum Verankern des Kabels umfasst, und das Loch als Sehne und senkrecht zur Achse (7) und von dieser beabstandet angeordnet ist,
**dadurch gekennzeichnet, dass** das Befestigungsrad (1) mit einer oder mehreren zur Achse (7) senkrecht liegenden Schnittebenen (6) in wenigstens zwei Teile oder in zwei Hälften (14) geteilt ist, wobei die Schnittebenen (6) das eine oder die mehreren Löcher (3) des Befestigungsrads (1) schneiden, wobei die wenigstens zwei Teile oder die zwei Hälften zueinander entlang der Achse (7) versetzt oder verschoben werden können, um einen Spalt zwischen den Teilen oder Hälften (14) des Rads (1) auszubilden.

2. Anordnung nach Anspruch 1,
**dadurch gekennzeichnet, dass** das Rad (1) von einer Schnittebene geteilt wird, die senkrecht zur Achse (7) verläuft.

3. Anordnung nach Anspruch 1 oder 2,
**dadurch gekennzeichnet, dass** das Rad (1) wenigstens eine Nut (2) entlang seines Umfangs umfasst, wobei die Nut das Kabel beim Ziehen des Kabels teilweise umgibt.

4. Anordnung nach einem der Ansprüche 1-3,
**dadurch gekennzeichnet, dass** die Befestigungslöcher (3) an den Durchmesser der Kabel angepasst sind, die durch die Befestigungslöcher (3) laufen sollen.

5. Anordnung nach Anspruch 4,
**dadurch gekennzeichnet, dass** der Durchmesser der Befestigungslöcher (3) 0,5-5 mm kleiner ist als der Durchmesser des Kabels, das durch die Befestigungslöcher (3) laufen soll.

6. Anordnung nach einem der Ansprüche 1-5,
**dadurch gekennzeichnet, dass** wenigstens ein Befestigungsloch (3) oval ist.

7. Anordnung nach einem der Ansprüche 1-6,
**dadurch gekennzeichnet, dass** die Achse (7) des Befestigungsrads ein Bolzen (10) ist und dass die Teile des Befestigungsrads (3) über eine Mutter (8) zusammengehalten werden.

8. Anordnung nach einem der Ansprüche 1-7,
**dadurch gekennzeichnet, dass** für diese ferner ein Schraub- und Anbauwerkzeug (9, 12) bereitgestellt ist, welches einen Ringschlüssel (9) und ein Tragelement (12) umfasst.

9. Anordnung nach Anspruch 8,
**dadurch gekennzeichnet, dass** ein erster Endabschnitt des Ringschlüssels (9) auf einer Seite des Rads (1) am Bolzen (10) angeordnet ist und ein erster Endabschnitt des Tragelements (12) auf der anderen Seite des Rads angeordnet ist und ein zweiter Endabschnitt des Ringschlüssels (9) beziehungsweise des Tragelements (12) zusammengefügt und miteinander verbunden sind.

10. Anordnung nach einem der Ansprüche 8 oder 9,
**dadurch gekennzeichnet, dass** das Tragelement (12) mit Mitteln zum Tragen der Anordnung bereitgestellt ist.

11. Anordnung nach einem der Ansprüche 8-10,
**dadurch gekennzeichnet, dass** der Ringschlüssel (9) die Form eines Griffs hat, der ein Loch (11) aufweist, welches über die Spannmutter (8) geführt werden kann.

12. Verfahren zum Befestigen eines Kabels, Seils, Drahts, Schlauchs oder eines anderen länglichen Objekts an einem Befestigungsrad (1), das um eine Drehachse drehbar ist, wobei das Rad (1) eine Achse (7) und ein oder mehrere als Sehnen angebrachte Verankerungslöcher (3) umfasst, die senkrecht zu einer Achse (7) und von dieser beabstandet angebracht sind, wobei das Rad von wenigstens einer Schnittebene in zwei Teile geteilt wird, die im Wesentlichen senkrecht zur Drehachse und durch das eine oder die mehreren als Sehnen angebrachten Verankerungslöcher verläuft, umfassend die folgenden Schritte:
- Ziehen eines Kabels über den Umfang des Rads (1) an eine gewünschte Position,
- Verschieben eines ersten Teils des Rads über die Achse, um einen Spalt zwischen den zwei Teilen des Rads auszubilden,
- Gleitenlassen des Kabels in ein geeignetes Verankerungsloch (3),
- Verschieben des ersten Teils zurück über die Achse (7),
- Zusammenklemmen der Teile des Rads und somit Einklemmen des Kabels im Verankerungsloch (3).

13. Verfahren nach Anspruch 12, ferner umfassend die folgenden Schritte:
- Bereitstellen einer umlaufenden Nut im Rad,
- Ziehen eines Kabels über die umlaufende Nut (2) des Rads.

14. Verfahren nach Anspruch 12 oder 13, ferner umfassend die folgenden Schritte:
- Bereitstellen eines Bolzens (10) als Achse,
- Bereitstellen einer Mutter (8) auf dem Bolzen (10),
- Zusammenklemmen der Teile des Rads unter Einsatz der Mutter (8) auf dem Bolzen (10).

## Revendications

1. Aménagement à roue de montage pour câbles, cordages, fils métalliques, tuyaux et autres objets allongés, ledit aménagement comprenant une roue de montage (1) avec un arbre (7) autour duquel la roue (1) peut tourner, la roue de montage (1) comprenant au moins un trou pour ancrer le câble, le trou étant ménagé sur la corde et perpendiculairement à l'arbre (7) à distance de celui-ci,
**caractérisé en ce que** la roue de montage (1) est divisée en au moins deux parties ou deux moitiés (14) par un ou plusieurs plans de division (6) qui sont perpendiculaires à l'arbre (7), les plans de division (6) passant à travers les un ou plusieurs trous (3) de la roue de montage (1), dans lequel les au moins deux parties ou deux moitiés peuvent être décalées ou déplacées l'une par rapport à l'autre sur l'arbre (7) pour former un intervalle entre les parties ou moitiés (14) de la roue (1).

2. Aménagement selon la revendication 1,
**caractérisé en ce que** la roue (1) est divisée par un seul plan de division s'étendant perpendiculairement à l'arbre (7).

3. Aménagement selon la revendication 1 ou la revendication 2,
**caractérisé en ce que** la roue (1) comprend au moins une rainure (2) autour de la circonférence, la rainure enserrant en partie le câble au cours de la traction de celui-ci.

4. Aménagement selon l'une quelconque des revendications 1 à 3, **caractérisé en ce que** les trous de montage (3) sont adaptés au diamètre des câbles envisagés pour circuler à travers les trous de montage (3).

5. Aménagement selon la revendication 4,
**caractérisé en ce que** le diamètre des trous de montage (3) est de 0,5 à 5 mm inférieur au diamètre du câble envisagé pour circuler à travers les trous de montage (3).

6. Aménagement selon l'une quelconque des revendications 1 à 5,
**caractérisé en ce qu'**au moins un trou de montage (3) est ovale.

7. Aménagement selon l'une quelconque des revendications 1 à 6,
**caractérisé en ce que** l'arbre (7) de la roue de montage est un boulon (10) et les parties de la roue de montage (3) sont pressées l'une vers l'autre au moyen d'un écrou (8).

8. Aménagement selon l'une quelconque des revendications 1 à 7,
**caractérisé en ce qu'**il est en outre pourvu d'une vis et d'un outil de fixation (9, 12) comprenant une clé (9) et un élément de suspension (12).

9. Aménagement selon la revendication (8),
**caractérisé en ce qu'**une première section d'extrémité de la clé (9) est aménagée sur le boulon (10) d'un côté de la roue (1) et une première section d'extrémité de l'élément de suspension (12) est aménagée de l'autre côté de la roue, les secondes sections d'extrémité de la clé (9) et de l'élément de suspension (12), respectivement, étant jointes et raccordées l'une à l'autre.

10. Aménagement selon l'une quelconque des revendications 8 ou 9,
**caractérisé en ce que** l'élément de suspension (12) est pourvu de moyens pour suspendre l'aménagement.

11. Aménagement selon l'une quelconque des revendications 8 à 10,
**caractérisé en ce que** la clé (9) a la forme d'une poignée comprenant un trou (11) qui est à même de passer par-dessus l'écrou de blocage (8).

12. Procédé de montage d'un câble, d'un cordage, d'un fil métallique, d'un tuyau ou d'un autre objet allongé dans une roue de montage (1) qui peut tourner autour d'un axe de rotation, la roue (1) comprenant un arbre (7) et un ou plusieurs trous d'ancrage (3) ménagés sur la corde perpendiculairement à l'arbre (7) et à une certaine distance de celui-ci, la roue étant divisée en au moins deux parties par au moins un plan s'étendant principalement perpendiculairement à l'axe de rotation et à travers les un ou plusieurs trous d'ancrage sur la corde, comprenant les étapes consistant à :
- tirer un câble sur la circonférence de la roue (1) en position souhaitée,
- décaler une première partie de la roue sur l'arbre pour former un intervalle entre deux parties de la roue,
- laisser le câble glisser dans un trou d'ancrage approprié (3),
- re-déplacer la première partie sur l'arbre (7), et
- bloquer les parties de la roue conjointement, en bloquant de la sorte le câble dans le trou d'ancrage (3).

13. Procédé selon la revendication 12, comprenant en outre les étapes consistant à :
- ménager une rainure périphérique dans la roue et
- tirer un câble par la rainure périphérique (2) de la roue.

14. Procédé selon la revendication 12 ou la revendication 13, comprenant également les étapes consistant à :
- mettre en oeuvre un boulon (10) comme arbre,
- insérer un écrou (8) sur le boulon (10), et
- bloquer les parties de la roue conjointement au moyen de l'écrou (8) sur le boulon (10).
